**Europäisches Patentamt**

**European Patent Office**

**Office européen des brevets**

(19)

(11) Veröffentlichungsnummer: **0 309 742 B1**

(12) **EUROPÄISCHE PATENTSCHRIFT**

(45) Veröffentlichungstag der Patentschrift: **08.04.92**

(51) Int. Cl.⁵: **B01D 53/34**

(21) Anmeldenummer: **88113923.2**

(22) Anmeldetag: **26.08.88**

(54) **Verfahren zum Abscheiden von Stickoxiden aus einem Rauchgasstrom.**

(30) Priorität: **26.09.87 DE 3732560**

(43) Veröffentlichungstag der Anmeldung:
**05.04.89 Patentblatt 89/14**

(45) Bekanntmachung des Hinweises auf die
Patenterteilung:
**08.04.92 Patentblatt 92/15**

(84) Benannte Vertragsstaaten:
**AT BE CH DE ES FR GB IT LI LU NL SE**

(56) Entgegenhaltungen:
**EP-A- 0 135 148**
**EP-A- 0 278 241**
**DE-A- 3 032 927**
**DE-A- 3 525 770**

(73) Patentinhaber: **DEUTSCHE BABCOCK ANLA-
GEN GMBH**
**Parkstrasse 29, Postfach 4**
**W-4150 Krefeld 11(DE)**

(72) Erfinder: **Horch, Klaus, Dr.**
**Buschstrasse 30**
**W-4150 Krefeld(DE)**
Erfinder: **Hagenmaier, Hans-Paul, Prof.Dr.**
**Auf der Morgenstelle 18**
**W-7400 Tübingen 1(DE)**

(74) Vertreter: **Planker, Karl-Josef, Dipl.-Phys.**
**c/o Deutsche Babcock Anlagen AG Parkstrasse 29 Postfach 4 + 6**
**W-4150 Krefeld 11(DE)**

Rank Xerox (UK) Business Services

## Beschreibung

Die Erfindung betrifft ein Verfahren zum Abscheiden von Stickoxiden aus einem Rauchgasstrom gemäß dem einleitenden Teil des Patentanspruchs 1.

Bei der Entstickung von Rauchgasen durch Einmischen von Ammoniak in den Rauchgasstrom ist es - insbesondere wenn bei der nichtkatalytischen Entstickung zur Erzielung hoher Entstickungsgrade mit Ammoniaküberschuß gefahren wird - beim heutigen Stand der Technik nur schwer zu vermeiden, daß ein Teil des Ammoniaks - der sogenannte Schlupf - mit dem gereinigten Rauchgas in die Atmosphäre gelangt. Ein anderer Teil des Ammoniaks reagiert mit sauren Bestandteilen des Rauchgases unter Bildung von festen Ammoniumverbindungen, wie Ammoniumsulfat und Ammoniumchlorid, die mit dem Flugstaub abgeschieden werden oder ebenfalls teilweise in die Atmosphäre gelangen.

Gegenstand der EP-A2-0 264 041 ist ein Verfahren zur Rückgewinnung von Ammoniak beim Abscheiden von Stickoxiden aus Rauchgasen, bei dem Ammoniak, das nicht reagiert hat, sowie Ammoniumchlorid aus dem Rauchgasstrom ausgewaschen und mit Luft aus dem Waschwasser ausgetrieben wird. Die mit Ammoniak angereicherte Luft wird entweder in die Feuerung oder stromaufwärts von der katalytischen oder nichtkatalytischen Entstickungszone in den Rauchgaskanal zurückgeführt, wo das zurückgewonnene Ammoniak wieder zur Entstickung beitragen soll.

Wenn das zurückgewonnene Ammoniak in die Feuerung eingespeist wird, besteht aber die Gefahr, daß es in Bereiche zu hoher Temperatur gelangt, verbrannt wird und so den Stickoxidgehalt des Rauchgases nicht verkleinert, sondern vergrößert. Die Einblasung in den Rauchgasstrom ist wegen der ungleichmäßigen Menge des zurückgewonnenen Ammoniaks und wegen der schwer kontrollierbaren Menge an Trägerluft und mitgeführten Wasserdampf problematisch.

Die DE-A1-35 26 756 befaßt sich mit einem Verfahren zum Abtrennen von Ammomiakresten aus der Flugasche eines Rauchgases, dem zum Zweck der selektiven Reduktion seines Stickoxidgehaltes Ammoniak beigemischt worden ist, wobei die aus dem Rauchgas abgetrennte Flugasche mit heißem Behandlungsgas - auf 700 bis 800 °C aufgeheizte Luft - auf erhöhte Temperatur gebracht und anschließend von dem Behandlungsgas abgeschieden wird. Das mit Ammoniak beladene Behandlungsgas wird stromaufwärts von der mit Katalysatoren bestückten Reaktionszone wieder in den Rauchgasstrom eingeleitet.

Ein ähnliches Verfahren, bei dem als Behandlungsgas Rauchgas von 350 bis 700 °C verwendet wird, ist durch die DE-A1-30 32 927 bekannt geworden.

In der DE-C-24 11 672, die sich mit der Entstickung durch selektive nichtkatalytische Reduktion unter Verwendung von Ammoniak befaßt, wird schon erwähnt, daß das Ammoniak auch in Wasser gelöst sein kann.

Auch aus der DE-A1-38 00 730 ist es schon bekannt, bei der Entstickung von Rauchgas das Ammoniak als wäßrige Lösung einzusetzen, und zwar sowohl bei katalytischen als auch bei nichtkatalytischen Verfahren.

Bei den bekannten Verfahren, die die Wiederverwendung von zurückgewonnenem Ammoniak umfassen, ist die Menge des zurückgeführten Ammoniaks von den Betriebsbedingungen abhängig. Daher ist die aus frischem und zurückgewonnenem Ammoniak bestehende Gesamtmenge, die der Reaktionszone zugeführt wird, nicht genau bestimmbar und regelungstechnisch schwer zu beherrschen. Der Erfindung liegt daher die Aufgabe zugrunde, ein Verfahren gemäß dem Oberbegriff des Patentanspruchs 1 anzugeben, bei dem die Ammoniakmenge, die der Reaktionszone zugeführt wird, unabhängig von Schwankungen der zurückgeführten Ammoniakmenge exakt dosierbar ist.

Diese Aufgabe wird durch die kennzeichnenden Merkmale des Anspruchs 1 gelöst. Das Verfahren gemäß der Erfindung hat den Vorteil, daß das Ammoniak nur aus einer einzigen Quelle der Reaktionszone zugeführt wird, nämlich aus dem Ammoniakwasservorrat.

Die in Anspruch 2 angegebene Verfahrensvariante ist auf den Fall zugeschnitten, daß das Rauchgas noch gasförmiges Ammoniak enthält, das nicht reagiert hat.

Dagegen bezieht sich die Verfahrensvariante gemäß Anspruch 3 auf den Fall, daß die Flugasche feste Ammoniumverbindungen enthält, aus denen Ammoniak zurückgewonnen wird.

Die in Anspruch 4 angegebene bevorzugte Verfahrensvariante bezieht sich auf den am häufigsten vorkommenden Fall, daß der Rauchgasstrom sowohl gasförmiges Ammoniak als auch feste Ammoniumverbindungen mitführt. Dabei wird das aus dem Flugstaub ausgetriebene Ammoniakgas in den Rauchgasstrom eingemischt und zusammen mit dem im Rauchgas enthaltenen Ammoniakgas abgetrennt und weiterbehandelt.

Die im Anspruch 5 angegebene Ausgestaltung der Erfindung betrifft die Weiterbehandlung der Waschflüssigkeit. Die Rückführung der Waschflüssigkeit in den Rauchgasstrom hat den Vorteil, daß etwaige in der Waschflüssigkeit verbliebene Ammoniakreste erneut der Waschvorrichtung zugeführt werden.

Die Ansprüche 6 und 7 enthalten ebenfalls Ausgestaltungen der Erfindung. Sie geben die Bedingungen an, unter denen gleichzeitig mit der Ammoniakaustreibung aus der Flugasche eine Zersetzung hochgiftiger Dioxine erreicht wird.

Anspruch 8 gibt - alternativ zu den Ansprüchen 6 und 7 - eine andere Möglichkeit zur thermischen Austreibung des Ammoniaks aus der Flugasche an.

Gemäß Anspruch 9 erfolgt die Abtrennung der festen Ammoniumverbindungen aus der Flugasche durch eine in das erfindungsgemäße Verfahren eingebettete Extraktion.

Das erforderliche Extraktionsmittel wird gemäß Anspruch 10 einfach einer anderen Verfahrensstufe entnommen.

Anspruch 11 gibt die optimalen Bedingungen für die Austreibung des Ammoniaks aus der Waschflüssigkeit an.

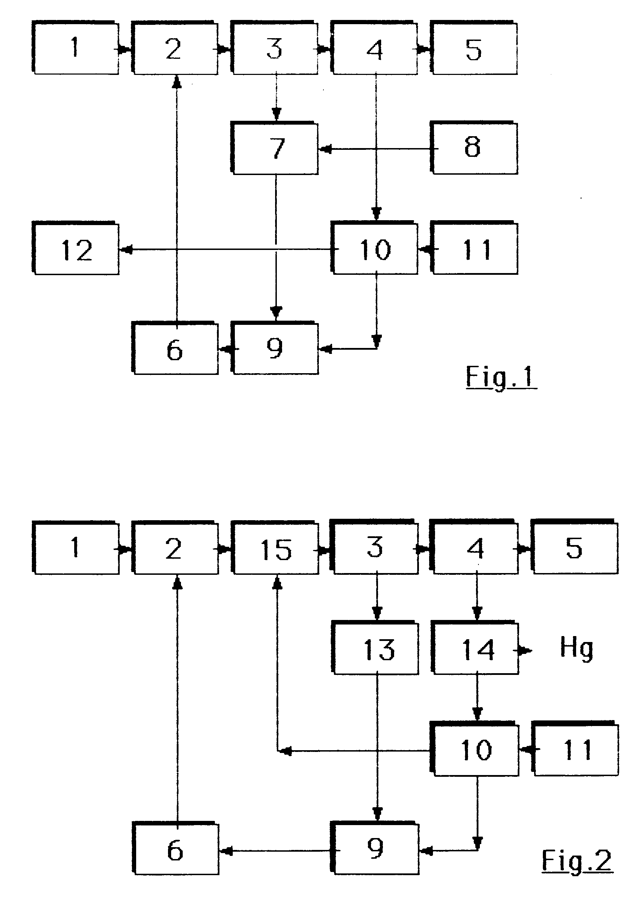

Die Zeichnung dient zur Erläuterung der Erfindung anhand von Ausführungsbeispielen. Die Figuren 1 bis 4 zeigen je ein Übersichtsschema einer Variante des erfindungsgemäßen Verfahrens.

Gemäß Figur 1 gelangt ein Rauchgasstrom, der aus einer Feuerung 1 austritt, über einen Kessel 2, einen Trockenentstauber 3 und einen Rauchgaswäscher 4 zu einem Kamin 5 und von dort ins Freie. Aus einem Speicherbehälter 6 wird Ammoniakwasser entnommen und im Bereich des Kessels 2 in den Rauchgasstrom eingemischt. Der in dem Speicher 6 enthaltene Ammoniakwasservorrat wird regelmäßig aufgefüllt und auf konstanter Konzentration gehalten. Unmittelbar stromabwärts von der Stelle, an der das Ammoniakwasser in den Rauchgasstrom eingemischt wird, befindet sich in dem Kessel 2 die Reaktionszone, in der die vom Rauchgas mitgeführten Stickoxide in einer homogenen Gasphasenreaktion nichtkatalytisch mit dem Ammoniak in unschädliche Stoffe umgewandelt werden.

Aus dem im Trockenentstauber 3 abgeschiedenen Flugstaub, der geringe Mengen an Ammoniumsalzen enthält, wird in dem Apparat 7, der z.B. als Wirbelbett ausgebildet ist, Ammoniak ausgetrieben. Die Austreibung des Ammoniaks wird durch direkte Erhitzung mit Heißgas von vorzugsweise 700 bis 800 °C bewirkt, das dem Apparat 7 aus dem Heißgaserzeuger 8 zugeführt wird. Das ammoniakhaltige Gas wird dem Ammoniakwäscher 9 zugeführt.

In dem Rauchgaswäscher 4 werden mit einer im Kreislauf geführten, sauren, wäßrigen Waschflüssigkeit gasförmige Schadstoffe, wie z.B. Chlorwasserstoff, aus dem Rauchgas abgeschieden. Dabei wird auch das in dem Rauchgas enthaltene gasförmige Ammoniak in die Waschflüssigkeit überführt. Der Rauchgaswäscher 4 kann auch noch weitere Waschstufen umfassen, z.B. eine mit basischer Waschflüssigkeit betriebene Waschstufe zur Abscheidung von Schwefeldioxid. Derartige weitere Waschstufen stehen aber in keinem Zusammenhang mit der Erfindung, so daß ihre Beschreibung entbehrlich ist.

Aus dem Kreislauf des Rauchgaswäschers 4 wird ein Teil der sauren Waschflüssigkeit abgezweigt und einem beheiztem Gefäß 10 zugeführt. Dort wird die Waschflüssigkeit durch Zugabe basischer Substanz, insbesondere Kalkmilch, die aus dem Behälter 11 eingespeist wird, auf einen pH-Wert von mindestens 10, vorzugsweise über 10,5 gebracht. Bei diesem pH-Wert und einer Temperatur von mindestens 60 °C wird während einer Verweildauer von 30 Minuten, vorzugsweise 50 bis 70 Minuten, das Ammonium aus der Flüssigkeit in gasförmiges Ammoniak überführt.

Das gasförmige Ammoniak wird ebenso wie das in dem Apparat 7 zurückgewonnene Ammoniakgas dem Ammoniakwäscher 9 zugeführt. Dort wird das Ammoniak mit Wasser aus der Gasphase ausgewaschen. Das auf diese Weise gewonnene Ammoniakwasser wird in den Ammoniakwasservorrat eingespeist, der in dem Speicherbehälter 6 enthalten ist.

Das aus dem beheizten Gefäß 10 austretende Abwasser ist von Ammoniak weitgehend frei. Es wird einer Abwasserreinigungsanlage 12 zugeführt.

In Figur 2 stimmen diejenigen Teile, die ein bereits in Figur 1 verwendetes Bezugszeichen haben, im wesentlichen mit den entsprechenden Teilen der Figur 1 überein und haben die gleiche Hauptfunktion. Sie werden daher der Kürze halber bei der nachfolgend beschriebenen Verfahrensvariante gemäß Figur 2 nicht mehr eigens erwähnt. Entsprechendes gilt für die weiteren Figuren in bezug auf die bereits in vorausgehenden Figuren verwendeten Bezugszeichen.

Bei der in Figur 2 veranschaulichten Variante des erfindungsgemäßen Verfahrens erfolgt die Austreibung des Ammoniaks aus dem Flugstaub in dem Apparat 13, der vorzugsweise als indirekt beheizter Drehrohrofen ausgebildet ist. Die Wärmebehandlung erfolgt zweckmäßig unter Sauerstoffmangel, d.h. unter einer Atmosphäre, die weniger als 2 % Sauerstoff enthält, bei einer Temperatur von 250 bis 500 °C. Unter diesen Bedingungen werden gleichzeitig halogenierte Aromaten, z.B. Dioxine, zerstört. Das Ammoniakgas wird dem Ammoniakwäscher 9 zugeführt.

Die aus dem Kreislauf des Rauchgaswäschers 4 abgezweigte saure Waschflüssigkeit wird bei dieser Verfahrensvariante über einen Anionenaustauscher 14, in dem das aus dem Rauchgas ausgewaschene Quecksilber abgetrennt wird, zu dem beheizten Gefäß 10 geleitet. Das aus dem Gefäß 10 abgezogene Abwasser wird einem Sprühtrockner 15 zugeführt, der im Rauchgasweg zwischen dem Kessel 2 und dem Trockenentstauber 3 eingeschaltet ist. In dem Sprühtrockner 15 wird das Wasser verdampft, und die verbleibende Trockensubstanz wird in dem stromabwärts angeordneten Staubabscheider abgetrennt. Falls das Abwasser noch Reste von Ammoniak enthält, wird dieses verdampft und in dem weiter stromabwärts angeordneten Rauchgaswäscher 4 ausgewaschen.

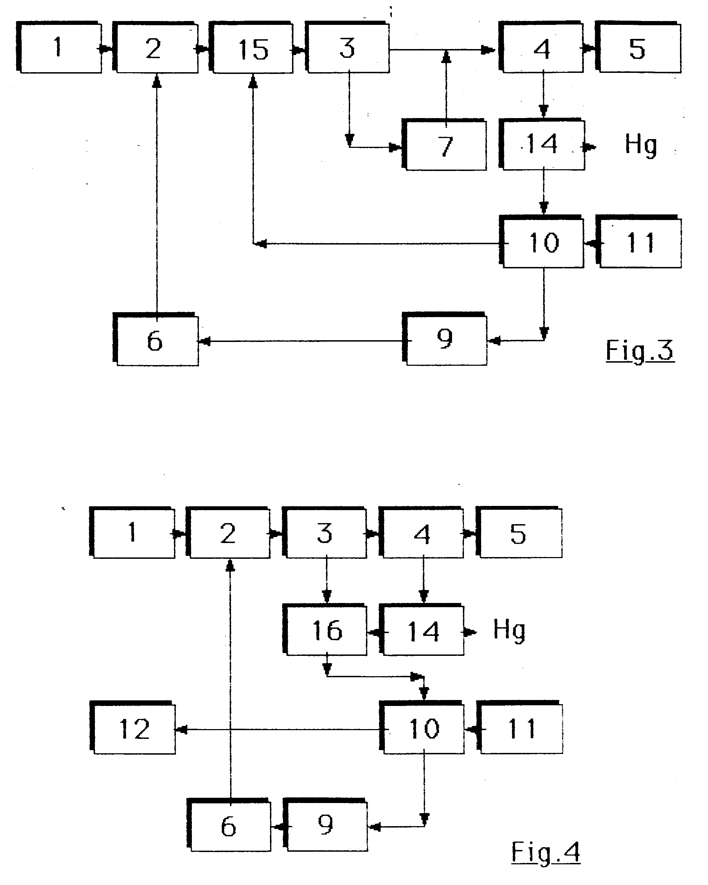

Bei der Verfahrensvariante gemäß Figur 3 wird das in dem Apparat 7 aus dem Flugstaub austretende Ammoniak zwischen dem Trockenentstauber 3 und den weiter stromabwärts angeordneten Rauchgaswäscher 4 in dem Rauchgasstrom zurückgeführt und zusammen mit dem ohnehin schon im Rauchgas enthaltenen Ammoniak in dem Rauchgaswäscher 4 abgeschieden.

Gemäß Figur 4 wird der Flugstaub, der in dem Trockenentstauber 3 anfällt, in einem Extraktionsgefäß 16 mit saurem Extraktionsmittel behandelt. Dieses wird aus dem Kreislauf des Rauchgaswäschers 4 abgezweigt und über den Anionenaustauscher 14 in das Extraktionsgefäß 16 eingespeist. Das von den Feststoffen wieder abgetrennte, mit Ammonium angereicherte Extraktionsmittel wird aus dem Extraktionsgefäß 16 in das beheizte Gefäß 10 eingespeist, wo - wie in Verbindung mit Figur 1 beschrieben - Ammoniak in die Gasphase überführt wird.

Liste der Bezugszeichen

| 1. | Feuerraum |
| 2. | Kessel |
| 3. | Trockenentstauber |
| 4. | Rauchgaswäscher |
| 5. | Kamin |
| 6. | Speicherbehälter für Ammoniakwasser |
| 7. | Apparat zur thermischen Behandlung des Flugstaubs mit Heißgas |
| 8. | Heißgaserzeuger |
| 9. | Ammoniakwäscher |
| 10. | Beheiztes Gefäß zum Austreiben des Ammoniaks aus der Waschflüssigkeit |
| 11. | Behälter mit basischer Substanz |
| 12. | Reinigungsanlage für Abwasser |
| 13. | Apparat zur thermischen Behandlung des Flugstaubs durch indirekte Beheizung |
| 14. | Anionenaustauscher |
| 15. | Sprühtrockner |
| 16. | Extraktionsgefäß |

**Patentansprüche**

1. Verfahren zum Abscheiden von Stickoxiden aus einem Rauchgasstrom durch selektive, insbesondere nichtkatalytische Reduktion mit Ammoniak,
   wobei an einer ersten, stromaufwärts von einer Reaktionszone gelegenen Stelle Ammoniak in den Rauchgasstrom eingemischt wird,
   wobei an mindestens einer anderen, stromabwärts von der Reaktionszone gelegenen Stelle Reste und/oder Reaktionsprodukte des Ammoniaks, gegebenenfalls zusammen mit anderen Schadstoffen, aus dem Rauchgasstrom abgetrennt werden
   und wobei hierdurch zurückgewonnenes Ammoniak zusammen mit frischem Ammoniak wieder an der ersten Stelle in den Rauchgasstrom eingemischt wird,
   dadurch gekennzeichnet, daß das Ammoniak in Form von Ammoniakwasser, das einem Vorrat entnommen wird, in den Rauchgasstrom eingemischt wird und daß das zurückgewonnene Ammoniak in wäßriger Lösung in den Ammoniakwasservorrat eingespeist wird, dessen Ammoniakkonzentration konstant gehalten wird.

2. Verfahren nach Anspruch 1, dadurch gekennzeichnet,
   daß gasförmiges Ammoniak in einer Waschzone mit wäßriger Flüssigkeit aus dem Rauchgas ausgewaschen wird,
   daß gelöstes Ammoniak aus der Waschflüssigkeit in die Gasphase überführt wird,
   daß das so erhaltene gasförmige Ammoniak mit Wasser, dem Säure zugesetzt ist, wieder aus der Gasphase ausgewaschen wird
   und daß das auf diese Weise gewonnene Ammoniakwasser in den Vorrat eingespeist wird.

3. Verfahren nach Anspruch 1 oder 2, dadurch gekennzeichnet,
   daß aus dem Rauchgasstrom Flugstaub abgeschieden wird,
   daß aus dem abgeschiedenen Flugstaub durch Wärmebehandlung Ammoniak ausgetrieben und in die Gasphase überführt wird,
   daß das so erhaltene gasförmige Ammoniak mit Wasser, dem Säure zugesetzt ist, wieder aus der Gasphase ausgewaschen wird,
   und daß das auf diese Weise gewonnene Ammoniakwasser in den Vorrat eingespeist wird.

4. Verfahren nach Anspruch 2, dadurch gekennzeichnet,
   daß aus dem Rauchgasstrom Flugstaub abgeschieden wird,
   daß aus dem abgeschiedenen Flugstaub durch Wärmebehandlung Ammoniak ausgetrieben und in die Gasphase überführt wird
   und daß dieses Ammoniak stromaufwärts von der Waschzone dem Rauchgasstrom beigemischt wird.

5. Verfahren nach einem der Ansprüche 2 bis 4, dadurch gekennzeichnet,
   daß die von Ammoniak befreite Waschflüssigkeit stromaufwärts von der Entstaubung und von der Waschzone in den Rauchgasstrom eingesprüht und dabei eingedampft wird.

6. Verfahren nach Anspruch 3 oder 4, dadurch gekennzeichnet,
daß die Wärmebehandlung durch indirekte Beheizung auf 250 bis 500 ° C unter Sauerstoffmangel erfolgt.

7. Verfahren nach Anspruch 6, dadurch gekennzeichnet,
daß die Wärmebehandlung in einer Atmosphäre erfolgt, deren Sauerstoffgehalt unter 2 Vol.-% gehalten wird.

8. Verfahren nach Anspruch 3 oder 4, dadurch gekennzeichnet,
daß die Wärmebehandlung durch direkte Beheizung mit einem heißen Trägergas erfolgt.

9. Verfahren nach Anspruch 1 oder 2, dadurch gekennzeichnet,
daß aus dem Rauchgasstrom Flugstaub abgeschieden wird,
daß aus dem abgeschiedenen Flugstaub durch Extraktion mit einem sauren, wäßrigen Extraktionsmittel Ammoniumverbindungen extrahiert werden,
daß gelöstes Ammoniak aus dem Extraktionsmittel in die Gasphase überführt wird,
daß das so erhaltene gasförmige Ammoniak mit Wasser, dem Säure zugesetzt ist, wieder aus der Gasphase ausgewaschen wird
und daß das auf diese Weise gewonnene Ammoniakwasswr in den Vorrat eingespeist wird.

10. Verfahren nach Anspruch 9, dadurch gekennzeichnet, daß ein Teilstrom der Waschflüssigkeit, mit der das Rauchgas gewaschen wird, abgezweigt und als Extraktionsmittel verwendet wird.

11. Verfahren nach Anspruch 2 oder 9 oder 10, dadurch gekennzeichnet,
daß die Überführung des Ammoniaks aus der Waschflüssigkeit in die Gasphase bei einer Temperatur von mindestens 60 ° C und einem pH-Wert von mindestens 20 während einer Verweilzeit von mindestens 30 Minuten, vorzugsweise 50 bis 70 Minuten, durchgeführt wird.

## Claims

1. A method of separating nitric oxides from a flue gas flow by selective, in particular non-catalytic reduction with ammonia,
wherein ammonia is mixed into the flue gas flow at a first point located upstream of a reaction zone,
wherein residue and/or reaction products of the ammonia, where appropriate together with other harmful substances, are separated from the flue gas flow at at least one other point located downstream of the reaction zone
and wherein ammonia recovered by these means together with fresh ammonia is mixed into the flue gas flow at the first point again,
characterised in that the ammonia is mixed into the flue gas flow in the form of aqueous ammonia which is drawn from a supply and in that the recovered ammonia is fed in aqueous solution into the aqueous ammonia supply, the ammonia concentration of which is held constant.

2. A method according to claim 1, characterised in that
gaseous ammonia is washed out of the flue gas with aqueous liquid in a wash zone,
in that dissolved ammonia is transferred from the wash liquid into the gas phase,
in that the gaseous ammonia thus obtained is washed out of the gas phase again with water, to which acid is added
and in that the aqueous ammonia thus obtained is fed into the supply.

3. A method according to claim 1 or 2, characterised in that
flue dust is separated from the flue gas flow,
in that ammonia is expelled from the separated flue dust by heat treatment and transferred into the gas phase,
in that the gaseous ammonia thus obtained is washed out of the gas phase again with water, to which acid is added,
and in that the aqueous ammonia thus obtained is fed into the supply.

4. A method according to claim 2, characterised in that
flue dust is separated from the flue gas flow,
in that ammonia is expelled from the separated flue dust by heat treatment and transferred into the gas phase
and in that this ammonia is mixed with the flue gas flow upstream of the wash zone.

5. A method according to any one of claims 2 to 4, characterised in that
the wash liquid liberated of ammonia is sprayed into the flue gas flow upstream of the dust removal and of the wash zone and evaporated as a result.

**6.** A method according to claim 3 or 4, characterised in that
the heat treatment takes place by indirect heating at 250°C to 500°C with lack of oxygen.

**7.** A method according to claim 6, characterised in that
the heat treatment takes place in an atmosphere of which the oxygen content is held below 2 vol.%.

**8.** A method according to claim 3 or 4, characterised in that
the heat treatment takes place by direct heating with a hot carrier gas.

**9.** A method according to claim 1 or 2, characterised in that flue dust is separated from the flue gas flow,
in that ammonium compounds are extracted from the separated flue dust by extraction using an acidic, aqueous extraction agent,
in that dissolved ammonia is transferred from the extraction agent into the gas phase,
in that the gaseous ammonia thus obtained is washed out of the gas phase again with water, to which acid is added
and in that the aqueous ammonia thus obtained is fed into the supply.

**10.** A method according to claim 9, characterised in that part of the flow of the wash liquid, with which the flue gas is washed, is tapped off and used as an extraction agent.

**11.** A method according to claim 2 or 9 or 10, characterised in that
the transfer of the ammonia from the wash liquid into the gas phase is carried out at a temperature of at least 60°C and a pH value of at least 10 for a duration of at least 30 minutes, preferably 50 to 70 minutes.

**Revendications**

**1.** Procédé pour éliminer des oxydes d'azote d'un courant de gaz de fumée par réduction sélective, en particulier non catalytique, avec de l'ammoniac,
dans lequel de l'ammoniac est mélangé au courant de gaz de fumée en un premier endroit, situe en amont d'une zone réactionnelle,
dans lequel des résidus et/ou des produits réactionnels de l'ammoniac, éventuellement conjointement à d'autres substances nuisibles, sont isolés du courant de gaz de fumée en au moins un autre endroit, situé en aval de la zone réactionnelle, et

dans lequel de l'ammoniac ainsi récupéré est, conjointement à de l'ammoniac frais, à nouveau mélangé au premier endroit au courant de gaz de fumée,
caractérisé en ce que l'ammoniac est mélangé au courant de gaz de fumée sous la forme d'eau ammoniacale, qui est prélevée d'une réserve, et en ce que l'ammoniac récupéré est alimenté en solution aqueuse dans la reserve d'eau ammoniacale, dont la concentration en ammoniac est maintenue constante.

**2.** Procédé suivant la revendication 1, caractérisé en ce que de l'ammoniac gazeux est, dans une zone de lavage, extrait du gaz de fumée par lavage avec un liquide aqueux, en ce que de l'ammoniac dissous provenant du liquide de lavage est passé dans la phase gazeuse, en ce que l'ammoniac gazeux ainsi obtenu est à nouveau extrait de la phase gazeuse par lavage avec de l'eau à laquelle de l'acide est ajouté, et en ce que l'eau ammoniacale produite de cette manière est alimentée dans la réserve.

**3.** Procédé suivant l'une ou l'autre des revendications 1 et 2, caractérisé en ce que des cendres volantes sont séparées du courant de gaz de fumée, en ce que de l'ammoniac est expulsé des cendres volantes séparées par un traitement thermique et est passé dans la phase gazeuse, en ce que l'ammoniac gazeux ainsi obtenu est à nouveau extrait de la phase gazeuse par lavage avec de l'eau à laquelle de l'acide est ajouté, et en ce que l'eau ammoniacale produite de cette manière est alimentée dans la réserve.

**4.** Procédé suivant la revendication 2, caractérisé en ce que des cendres volantes sont séparées du courant de gaz de fumée, en ce que de l'ammoniac est expulsé des cendres volantes séparées par un traitement thermique et est passé dans la phase gazeuse, et en ce que cet ammoniac est mélangé au courant de gaz de fumée en amont de la zone de lavage.

**5.** Procédé suivant l'une des revendications 2 à 4, caractérisé en ce que le liquide de lavage libéré de l'ammoniac est pulvérisé dans le courant de gaz de fumée en amont du dépoussiérage et de la zone de lavage et est alors évaporé.

**6.** Procédé suivant l'une des revendications 3 et 4, caractérisé en ce que le traitement thermique a lieu par chauffage indirect à 250 jusqu'à 500°C, en l'absence d'oxygène.

7. Procédé suivant la revendication 6, caractérisé en ce que le traitement thermique a lieu dans une atmosphère dont la teneur en oxygène est maintenue inférieure à 2 % en volume.

8. Procédé suivant l'une des revendications 3 et 4, caractérisé en ce que le traitement thermique a lieu par chauffage direct avec un gaz de support chaud.

9. Procédé suivant l'une des revendications 1 et 2, caractérisé en ce que des cendres volantes sont séparées du courant de gaz de fumée, en ce que, à partir des cendres volantes séparées, des composés d'ammonium sont extraits par extraction à l'aide d'un agent d'extraction aqueux, acide, en ce que de l'ammoniac dissous dans l'agent d'extraction est passé dans la phase gazeuse, en ce que l'ammoniac gazeux ainsi obtenu est à nouveau extrait de la phase gazeuse par lavage avec de l'eau à laquelle de l'acide est ajouté, et en ce que l'eau ammoniacale produite de cette manière est alimentée dans la réserve.

10. Procédé suivant la revendication 9, caractérisé en ce qu'un courant partiel du liquide de lavage, avec lequel le gaz de fumée est lavé, est dérivé et est utilisé comme agent d'extraction.

11. Procédé suivant l'une des revendications 2, 9 et 10, caractérise en ce que le passage de l'ammoniac à partir du liquide de lavage dans la phase gazeuse est effectué à une température d'au moins 60°C et à une valeur de pH d'au moins 10 pendant une durée de séjour d'au moins 30 minutes, de préférence de 50 à 70 minutes.

Fig.1

Fig.2

Fig.3

Fig.4